Europäisches Patentamt

European Patent Office

Office européen des brevets

(11) Publication number: **0 048 308**
**B1**

# EUROPEAN PATENT SPECIFICATION

(45) Date of publication of patent specification: **19.12.84**

(21) Application number: **80303304.2**

(22) Date of filing: **19.09.80**

(51) Int. Cl.$^3$: **C 08 F 210/06,** C 08 F 214/26,
C 08 F 4/40 // (C08F210/06,
214/26),(C08F214/26, 210/06)

(54) Process for producing propylene-tetrafluoroethylene copolymer.

(43) Date of publication of application:
**31.03.82 Bulletin 82/13**

(45) Publication of the grant of the patent:
**19.12.84 Bulletin 84/51**

(84) Designated Contracting States:
**DE FR GB IT**

(56) References cited:
**GB-A- 847 577**
**GB-A-1 161 023**
**GB-A-1 456 615**

**JOURNAL OF POLYMER SCIENCE, Part A, vol.
3, 1965, New York, US, H.M. ANDERSEN et al.
"Redox kinetics of the peroxydisulfate-iron-
sulfoxylate system", pages 2343-2366
Trans. Faraday Soc. 42, p. 147 (1946)**

**The file contains technical information
submitted after the application was filed and
not included in this specification**

(73) Proprietor: **ASAHI GLASS COMPANY LTD.**
**No. 1-2, Marunouchi 2-chome**
**Chiyoda-ku, Tokyo (JP)**

(72) Inventor: **Kojima, Gen**
**2-11-6 Tsukushino Machida-shi**
**Tokyo (JP)**
Inventor: **Hisasue, Michio**
**5654-290, Hinocho Kohnan-ku**
**Yokohama-shi Kanagawa-ken (JP)**

(74) Representative: **Warden, John Christopher et al**
**R.G.C. Jenkins & Co. 12-15, Fetter Lane**
**London EC4A 1PL (GB)**

Courier Press, Leamington Spa, England.

## Description

The present invention relates to a process for producing a propylene-tetrafluoroethylene copolymer. More particularly, it relates to a process for producing the propylene-tetrafluoroethylene copolymer by copolymerizing propylene and tetrafluoroethylene in an aqueous medium in the presence of a specific redox catalyst to attain smooth copolymerization at high polymerization velocity without discoloring the latex or the copolymer and with high storage stability of the latex.

Propylene-tetrafluoroethylene copolymers are known as vulcanizable elastic polymers having excellent heat resistance and chemical resistance.

The copolymerization of propylene and tetrafluoroethylene in an aqueous medium has been disclosed in Japanese Examined Patent Publication No. 19188/1965, No. 4115/1978 and U.S. Patent 3,467,635. It has also been proposed in GB—A—1,456,615 that a propylene-tetrafluoroethylene copolymer having high molecular weight can be obtained by copolymerization at a relatively low temperature such as 0 to 50°C if a redox catalyst comprising (1) a water soluble inorganic persulfate, (2) a water soluble thiosulfate or bisulfite and (3) a water soluble iron salt as a catalyst for the copolymerization in an aqueous medium. The reaction velocity can be improved by adding the iron salt to the reaction medium in an activator solution containing a water-soluble pyrophosphate and a reducing sugar.

On the other hand, many redox catalysts for emulsion polymerization at relatively low temperatures have been reported over a long period. Sometimes catalytic activity is specifically dependent upon a combination of the redox catalyst with a particular monomer. The limitation for the selection is more severe in the case of multi-component copolymerization and is related to various factors such as reactivity of the monomer, efficiency of initiation, chain transfer, kinetic chain length, pH of the medium and the stabilities of the monomer and the catalyst. Therefore, it is not easy to find an optimum redox catalyst for a specific polymerization system. In the case of a copolymerization system having high chain transfer activity and short kinetic chain length such as a copolymerization of propylene and tetrafluoroethylene, the selection of an optimum redox catalyst is especially difficult. For example, most catalysts having high catalytic activity for emulsion polymerizations of tetrafluoroethylene at low temperature are not active for copolymerizations of propylene and tetrafluoroethylene at low temperature.

According to the Inventor's studies, the specific redox catalysts disclosed in British Patent No. 1,456,615 are active for the copolymerization of propylene and tetrafluoroethylene at a low temperature, but copolymerizations at a low temperature with such catalysts have the following disadvantages. First, the copolymerization velocity is not high enough, the maximum being about 17 g./l.hr even when using the activating solution. When this solution is used, discoloring (dark-coloring) of the latex and the polymer is remarkably severe even when lengthy and complicated washing and purification steps are employed because of the reducing sugar in the activating solution. Moreover, the COD of the waste solution in the coagulation of the latex and the washing is remarkably high, which renders the treatment of the waste solution difficult. Furthermore, the storage stability of the latex is not high enough and sedimentation and separation with long storage of the latex. The reducing sugar is perishable and causes discoloring and an unpleasant odour. The preparation of the activated solution is complicated and the activated solution is immediately inactivated by contact with oxygen in air. Therefore, the preparation is not easy and the catalytic activity is not stable.

H. M. Andersen and S. I. Proctor Jr. (Journal of Polymer Science. PT.A Vol 3 pp 2343—2366) report a study of the redox kinetics of peroxydisulfate-iron-sulfoxylate redox systems. A catalyst system comprising potassium peroxydisulfate, sodium formaldehyde sulfoxylate and iron ethylenediamintetraacetate is used for an aqueous emulsion polymerization of styrene.

It is an object of the present invention to overcome the above-mentioned disadvantages in a copolymerization of propylene and tetrafluoroethylene at a low temperature in an aqueous medium.

The present invention provides a process for producing a propylene-tetrafluoroethylene copolymer which comprises copolymerizing propylene and tetrafluoroethylene in an aqueous medium in the presence of a redox catalyst comprising (1) a water soluble persulfate and (2) a water soluble iron salt characterised in that the catalyst also includes (3) a hydroxymethanesulfinate and (4) ethylenediaminetetraacetic acid or a salt thereof and the copolymerization is carried out at pH 7 to 10.5.

The inventors have studied the copolymerization of propylene and tetrafluoroethylene in an aqueous medium at a low temperature, which had not hitherto been easily carried out, so as to overcome the above-mentioned disadvantages in the process. As a result, it has been found that the specific redox catalyst of the combination of (1) a water soluble persulfate, (2) a water soluble iron salt, (3) a hydroxymethanesulfinate and (4) ethylenediaminetetraacetic acid or a salt thereof (EDTA) is effective for this purpose and the specific redox catalyst has high catalytic activity in an alkaline aqueous solution at pH of up to 10.5.

Using the process of the present invention, it is possible to copolymerize propylene and tetrafluoroethylene at high copolymerization velocity in an aqueous medium. Thus, the copolymerization can be smoothly performed at a low temperature, suitably lower than 40°C and a propylene-tetrafluoroethylene copolymer of high molecular weight can be obtained. In the process of the present invention, smooth copolymerization in an aqueous medium is attained and the stability of the resulting latex is excellent. Coloring of the latex and the polymer is not found and the COD of the waste solution can be re-

2

markably reduced. The copolymerization can be continued for a long time by continuously adding the hydroxymethanesulfinate as a reducing agent. The copolymerization velocity can be controlled as desired for example by adjusting the amount of the hydroxymethanesulfinate.

In the process of the present invention, the molar ratio of $C_2F_4/C_3H_6$ in the reaction system is not critical and can be varied within a broad range, it is usually in a range of 95/5 to 20/80.

When the content of $C_2F_4$ is high, the copolymerization velocity is faster and a copolymer having high molecular weight is effectively produced. Therefore, the molar ratio of $C_2F_4/C_3H_6$ is preferably 95/5 to 40/60, escpecially 93/7 to 70/30. In the process of the present invention, it is possible to copolymerize $C_2F_4$ and $C_3H_6$ as the major components with one or more other comonomers to make a multicomponent polymer, selecting the molar ratios, according to type of product required.

In the process of the present invention, various components for the specific redox catalyst can be used.

Suitable water soluble persulfates for use as the first component include ammonium or alkali metal salts such as ammonium persulfate, potassium persulfate and sodium persulfate.

Suitable water soluble iron salts for use as the second component include divalent or trivalent iron salts such as ferrous sulfate, ferric sulfate, ferrous nitrate, ferric nitrate, ferrous chloride, ferric chloride, ammonium ferrous sulfate, and ammonium ferric sulfate. The ferric or ferrous sulfate is especially preferable as the second component.

The first and second components are combined with a hydroxymethanesulfinate (referred to as HMSA) such as $CH_2(OH)SO_2Na$ and ethylenediaminetetraacetic acid or a salt thereof (referred to as EDTA).

The EDTA is preferably in the form of its disodium salt, but other salts or hydrates or ethylenediaminetetraacetic acid itself can be used.

The HMSA is preferably in the form of an alkali metal salt such as a sodium or potassium salt thereof. It is possible to use a hydrate thereof or to include a small amount of hydroxymethanesulfonate.

The proportions of the components of the specific redox catalyst used in the present invention can be selected as desired.

The following facts have been found. With regard to the dependence of copolymerization velocity on the catalytic component contents, the water soluble persulfate content has little influence, but the iron ion content and HMSA content have a relatively high influence. EDTA has high chelate forming stability with iron ions and EDTA is used to ensure effective iron ion concentration as the catalytic component. Therefore, EDTA is incorporated at an equivalent concentration to the iron ion concentration in the optimum condition.

Usually, the water soluble persulfate is incorporated at a concentration of 1 to 50 m mol/liter; the water soluble iron salt and EDTA are respectively incorporated at concentrations of 0.05 to 5 m mol/liter; and HMSA is incorporated at a concentration of 0.5 to 50 m mol/liter in the aqueous medium. When the concentrations of the water soluble iron salt and EDTA are set at a relatively high level, the concentration of HMSA can be set at a relatively low level, and vice versa.

In order to achieve the desired copolymerization velocity, the concentrations of the components can be adjusted as desired.

The specific redox catalyst used in the present invention is usually used at a concentration of 0.001 to 5 wt., preferably 0.01 to 2 wt.% based on the aqueous medium. The content of the specific redox catalyst can be above this range, but there is tendency to decrease the molecular weight of the resulting copolymer which is economically disadvantageous. It is preferable to select a concentration from within said range.

The copolymerization is usually carried out at a relatively low temperature such as 0 to 50°C. If the reaction temperature is too high, the molecular weight of the resulting copolymer is lowered, the decomposing velocity of the catalyst is too fast and accordingly the efficiency is lower. If the temperature is too low, the copolymerization velocity is too low for a practical operation. The reaction temperature is preferably in a range of 5 to 45°C, especially 10 to 40°C.

The pH dependency of the copolymerization velocity is high, this being a characteristic feature of the copolymerization of the present invention. Thus, pH must be in a range from 7 to 10.5, preferably 8 to 10.5. If pH is outside this range, the copolymerization velocity is low. If pH is higher than 10.5, the copolymerization velocity is very low.

In the process of the present invention, the other conditions for the copolymerization are not critical. It is possible to employ a batch operation or a continuous operation under stirring.

The pressure in the copolymerization is not critical and is usually less than 100 kg./cm$^2$ (9806.65 KPa) (gauge), preferably in a range of 5 to 80 kg./cm$^2$ (490—7845 KPa) (gauge), especially 10 to 50 kg./cm$^2$ (980.7—4903 KPa) (gauge).

In the process of the present invention, it is possible to use various additives which are used in similar copolymerizations in an aqueous medium. For example, an emulsifier required for an emulsion polymerization can be used.

Suitable emulsifiers include conventional polyfluoro- or polyfluorochloro-alkyl type emulsifiers such as water soluble salts of polyfluoroaliphatic carboxylic acids and perfluoroaliphatic carboxylic acids, water soluble salts of polyfluorochloroaliphatic carboxylic acids or perfluorochloroaliphatic carboxylic acids and phosphates or sulfates of polyfluoroalcohols. It is also possible to use non-fluorinated emulsifiers such as sulfates of higher fatty alcohols or water soluble salts of aromatic sulfonic acids. A mixture of emulsifiers can be used. The emulsifier is usually used at a concentration of 0.0001 to 10 wt.%, preferably 0.001 to 5 wt.% based on the aqueous medium. It is also possible to incorporate a dispersion stabilizer such as trifluorotrichloroethane, liquid chlorinated hydrocarbons, liquid saturated hydrocarbons, a pH regulator, a buffering agent, an accelerator, and a chain transfer agent.

In the present invention, it is preferable to carry out the copolymerization in a weak alkaline condition (pH of about 9 to 10) to increase the copolymerization velocity. It is suitable to incorporate a pH regulator such as sodium hydroxide, potassium hydroxide or ammonium hydroxide, and a buffering agent such as sodium hydrogenphosphate or sodium borate.

It is possible to incorporate a water soluble organic solvent such as methanol, tert-butanol; and methyl acetate so as to increase the copolymerization velocity.

In accordance with the process of the present invention, the product is obtained in the form of a dispersion such as an emulsion in which the propylenetetrafluoroethylene copolymer is dispersed in an aqueous medium. The propylene-tetrafluoroethylene copolymer having elasticity can be easily separated from such dispersion by well-known conventional methods. It is possible to use the product in the form of a dispersion or a concentrated dispersion, in an operation for fabrication.

The resulting copolymers have the advantages of less discoloring and excellent electrical properties, chemical resistance, heat resistance and mechanical resistance. These can be used for various purposes in view of these characteristics.

The present invention will be illustrated by the following examples and references which are provided for purposes of illustration only and are not intended to be construed as limiting the present invention.

### Example 1

In a 100 ml. stainless steel ampoule (pressure resistance of 50 kg./cm$^2$, 4903 KPa), 40 g. of deionized water, 5 g. of tertbutanol, 0.5 g. of $C_8F_{17}COONH_4$, 1.0 g. of $Na_2HPO_4.12H_2O$, and 0.1 g. of NaOH were charged and then, 0.5 g. of ammonium persulfate dissolved in a small amount of water was added. The ampoule was cooled with liquid nitrogen, and 5 g. of an aqueous solution containing 0.0075 g. of $FeSO_4.7H_2O$, 0.009 g. of EDTA (disodium salt of ethylenediaminetetraacetic acid dihydrate) and 0.04 g. of $CH_2(OH)SO_2Na$ was charged and the ampoule was evacuated. The aqueous medium containing the catalyst had pH of 9.1. Into the ampoule, 8.2 g. of a gaseous mixture of propylene and tetrafluoroethylene (molar ratio of $C_2F_4/C_3H_6$ of 85/15) was fed and the ampoule was vibrated in a constant temperature vessel at 25°C to carry out the copolymerization. As a result, propylene-tetrafluoroethylene copolymer having a molecular weight of 133,000 and a molar ratio of $C_2F_4/C_3H_6$ of 55/45 was obtained at a copolymerization velocity of 120 g./l.hr.

### Examples 2 to 4 and References 1 and 2

In accordance with the process of Example 1 except varying the kind and amount of the pH regulator and the buffering agent NaHPO$_4$.12H$_2$O, NaOH etc.) to change the pH of the aqueous medium containing the catalyst as shown in Table 1, each copolymerization was carried out.

The copolymerization velocities achieved in these copolymerizations are shown in Table 1.

### TABLE 1

|  | pH | Copolymerization velocity (g./l.hr.) |
|---|---|---|
| Reference 1 | 5.5 | 4.5 |
| Example 2 | 7.9 | 20 |
| Example 3 | 9.7 | 120 |
| Example 4 | 10.5 | 110 |
| Reference 2 | 10.8 | 1.8 |

### Example 5

In a 2 liter stainless steel autoclave having pressure resistance of 50 kg./cm$^2$ (4903 KPa) equipped with a stirrer and a jacket, 1014 g. of deionized water, 116 g. of tert-butanol, 5.8 g. of $C_8F_{17}$ COONH$_4$, 34.8 g. of Na$_2$HPO$_4$.12H$_2$O and 2.5 g. of NaOH were charged and then, 11.6 g. of ammonium persulfate was added. An aqueous solution of 0.058 g. of FeSO$_4$.7H$_2$O, 0.069 g. of EDTA in 50 g. of water was added, the autoclave was closed and evacuated to a reduced pressure and nitrogen gas was fed to a pressure of 30 kg./cm² (2942 KPa) to purge it. The autoclave was evacuated to a reduced pressure and was maintained at 22°C. Into the autoclave, 139 g. of $C_2F_4$ monomer and 7 g. of $C_3H_6$ monomer (molar ratio of $C_2F_4/C_3H_6$ of 93/7) were fed and then a deionized water solution containing 8.7 wt.% of $CH_2(OH)SO_2Na$ and 1 wt.% of NaOH was fed into the autoclave by a constant volumetric pump at a rate of 2.4 ml./hour (pH of 9.5). A mixed gas of propylene and tetrafluoroethylene (molar ratio of 56/44) was continuously fed so as to compensate the reduction of the pressure in the autoclave. The pressure in the reaction was 25 kg./cm² (2452 KPa). After 12 hours for the reaction, a latex having a concentration of the polymer of 25.6 wt.% was obtained, at a selectivity to latex of 99.3% and 397 g. of the polymer was separated. The average copolymerization velocity was 28.7 g./l.hr. The resulting latex had pH of 8.5 and was a stable white latex. The polymer separated by the addition of an aqueous solution of calcium chloride was a white spongy polymer having a $C_2F_4$ content of 56.5 mol.% and a molecular weight of 202,000.

### Examples 6 to 7

In accordance with the process of Example 5, except varying a molar ratio of $C_2F_4/C_3H_6$ (initial charge), a molar ratio of $C_2F_4/C_3H_6$ (additional charge), concentrations of iron ion and EDTA and a rate of the aqueous solution of $CH_2(OH)SO_2Na$ (8.7 wt.%, without NaOH) and a time for the copolymerization as shown in Table 2, each copolymerization was carried out. (In Examples 6 and 7, NaOH was not incorporated). The results are shown in Table 2.

### TABLE 2

|  | Example 6 | Example 7 |
|---|---|---|
| Molar ratio of $C_6F_4/C_3H_6$ (initial charge) | 85/15 | 93/7 |
| Molar ratio of $C_2F_4/C_3H_6$ (additional charge) | 55/45 | 56.5/43.5 |
| Concentrations of iron ion and EDTA (m mol/l.) | 0.54 | 0.18 |
| Feed rate of aqueous solution of $CH_2(OH)SO_2Na$ (ml./hr.) | 6.0 | 9.3 |
| Polymerization time (hr.) | 4.0 | 8.5 |
| Yield of polymer (g.) | 258 | 550 |
| $[\eta]$*/molecular weight | 0.80/ $1.33 \times 10^5$ | 0.95/ $1.8 \times 10^5$ |
| $C_2F_4$ component in polymer (mol %) | 54.8 | 56.2 |

Note: *$[\eta]$ Intrinsic viscosity in tetrahydrofuran at 30°C.

### Example 8

In the autoclave used in Example 5, 1014 g. of deionized water, 116 g. of tert-butanol, 5.8 g. of $C_8F_{17}COONH_4$, 34.8 g. of $Na_2HPO_4.12H_2O$ and 2.5 g. of NaOH were charged and then, ammonium persulfate was added at a ratio of 44 m mol/l. An aqueous solution of $FeSO_4.7H_2O$ and EDTA was added to give ratios of 0.18 m mol/l. of $FeSO_4.7H_2O$ and 0.18 m mol/l. of EDTA.

In accordance with the process of Example 5, the monomers were fed at a molar ratio of $C_2F_4/C_3H_6$ of 93/7 and $CH_2(OH)SO_2Na$ was fed at a rate of 1.6 g./hr. and a molar ratio of $C_2F_4/C_3H_6$ for the additional charge of the monomers was 56.5/43.5, and a copolymerization was carried out at 25°C under a pressure of 25 kg./cm² (2452 KPa). After 1.3 hours for the copolymerization, a latex having a concentration of the polymer of 11.8 wt.% was obtained, at a selectivity to latex of 99%, and 155 g. of the polymer was separated. An average copolymerization velocity was 100 g./l.hr. The resulting latex was a stable white latex. The polymer separated by the salting-out was a white spongy polymer having a $C_2F_4$ content of 56.5 mol % and a molecular weight of 195,000.

## Example 9

In accordance with the process of Example 5 except that glycidyl ether (CVE) was added as a third monomer at a ratio of 2 mol % based on the total monomers and 40% of tert-butanol was substituted by sec-butanol for the adjustment of a molecular weight of the polymer, a copolymerization was carried out. GVE was continuously fed during the copolymerization by a pressure resistant constant volumetric pump to give said ratio. After 3.6 hours for the copolymerization, a latex having a concentration of the polymer of 14.6 wt.% was obtained and 200 g. of the polymer was separated. According to an NMR analysis, the polymer had 56 mol % of $C_2F_4$ component, 42 mol % of $C_3H_6$ component and 2 mol % of GVE. The polymer had an intrinsic viscosity of 0.42 (in tetrahydrofuran at 30°C).

## Example 10

In accordance with the process of Example 5 except that 17.4 g. of $C_{12}H_{25}SO_4Na$ was used instead of $C_8F_{17}COONH_4$, and the aqueous solution of $CH_2(OH)SO_2Na$ was fed at a rate of 9.4 ml./hr., a copolymerization was carried out. As a result, a polymer having a molecular weight of 105,000 and $C_2F_4$ content of 56 mol % was obtained at a copolymerization velocity of 57 g./l.hr.

## Example 11

In accordance with the process of Example 1 except varying the temperature for the copolymerization from 25°C to 10°C, a copolymerization was carried out. As a result, a polymer having a molecular weight of 150,000 and a molar ratio of $C_2F_4/C_3H_6$ component of 55/45 was obtained at a copolymerization velocity of 35 g./l.hr.

## Claims

1. A process for producing a propylene-tetrafluoroethylene copolymer which comprises copolymerizing propylene and tetrafluoroethylene in an aqueous medium in the presence of a redox catalyst comprising (1) a water soluble persulfate and (2) a water soluble iron salt characterised in that the catalyst also includes (3) a hydroxymethanesulfinate and (4) ethylenediaminetetraacetic acid or a salt thereof and the copolymerization is carried out at pH 7 to 10.5.

2. A process according to claim 1 characterized in that the copolymerization is carried out at pH 8 to 10.5.

3. A process according to claim 1 or claim 2 characterized in that the temperature for the copolymerization is in a range of 0 to 50°C.

4. A process according to any preceding claim characterized in that the molar ratio of tetrafluoroethylene to propylene is in a range of 95/5 to 40/60.

## Revendications

1. Procédé pour la production d'un copolymère propylène-tétrafluoroéthylène, qui comprend la copolymérisation du propylène et du tétrafluoroéthylène en milieu aqueux en présence d'un catalyseur redox comprenant (1) un persulfate soluble dans l'eau et (2) un sel de fer soluble dans l'eau, caractérisé en ce que le catalyseur comprend également (3) un hydroxyméthanesulfinate et (4) de l'acide éthylènediaminetétracétique ou un de ses sels, et en ce que la copolymérisation est effectuée à un pH de 7 à 10,5.

2. Procédé selon la revendication 1, caractérisé en ce que la copolymérisation est effectuée à un pH de 8 à 10,5.

3. Procédé selon la revendication 1 ou la revendication 2, caractérisé en ce que la température de copolymérisation est dans une plage de 0 à 50°C.

4. Procédé selon l'une quelconque des revendications précédentes, caractérisé en ce que le rapport molaire du tétrafluoroéthylène au propylène est dans une plage de 95/5 à 40/60.

## Patentansprüche

1. Verfahren zur Herstellung eines Propylen-Tetrafluoräthylen-Copolymeren, umfassend die Copolymerisation von Propylen und Tetrafluoräthylen in einem wässrigen Medium in Gegenwart eines Redox-Katalysators, welcher (1) ein wasserlösliches Persulfat und (2) ein wasserlösliches Eisensalz umfaßt, dadurch gekennzeichnet, daß der Katalysator außerdem (3) ein Hydroxymethansulfinat und (4) Äthylendiamintetraessigsäure oder ein Salz derselben umfaßt und die Copolymerisation bei einem pH von 7 bis 10,5 durchegeführt wird.

2. Verfahren nach Anspruch 1, dadurch gekennzeichnet, daß die Copolymerisation bei einem pH von 8 bis 10,5 durchgeführt wird.

3. Verfahren nach Anspruch 1 oder Anspruch 2, dadurch gekennzeichnet, daß die Temperatur der Copolymerisation in einem Bereich von 0 bis 50°C liegt.

4. Verfahren nach einem der vorstehenden Ansprüche, dadurch gekennzeichnet, daß das Molverhältnis von Tetrafluoräthylen zu Propylen in einem Bereich von 95/5 bis 40/60 liegt.

6